# EUROPEAN PATENT APPLICATION

(11) **EP 4 546 808 A1**
(43) Date of publication of application: **30.04.2025**
(21) Application number: 24173194.2
(22) Date of filing: 29.04.2024
(51) Int. Cl.: H04N 23/62, H04N 23/63, H04N 23/67

(54) **VIDEO RECORDING METHOD, DEVICE AND MEDIUM**

(30) Priority: 26.10.2023 CN 202311404409
(71) Applicant: Beijing Xiaomi Mobile Software Co., Ltd., Beijing 100085 (CN)
(72) Inventor: LI, Haohan, Beijing, 100085 (CN); CAO, Zhiri, Beijing, 100085 (CN)
(74) Representative: Dehns Germany Partnerschaft mbB

(57) **Abstract**

The invention relates to the technical field of data processing, and in particular to a video recording method and device, a medium, and a terminal. The method includes: displaying (5101) a first window (400) on a video recording interface in response to a video recording operation, where the first window (400) is configured to display a preview content in a video recording process; and displaying (S102) a second window (301) on the video recording interface in response to a triggering operation on a target assistance function, where the second window (301) is configured to display information corresponding to the target assistance function.

## Description

### TECHNICAL FIELD

The invention relates to the technical field of data processing, and in particular to a video recording method, device and a medium.

### BACKGROUND OF THE INVENTION

In the related art, a video is recorded by a user with the aid of a mobile terminal.

### SUMMARY OF THE INVENTION

The invention provides a video recording method and device, a medium, and a terminal having the features of the independent claims.

According to a first aspect of the present invention, there is provided a video recording method. The method includes:
displaying a first window on a video recording interface in response to a video recording operation, where the first window is configured to display a preview content in a video recording process; and
displaying a second window on the video recording interface in response to a triggering operation on a target assistance function, where the second window is configured to display information corresponding to the target assistance function, and the target assistance function is configured to display or control data in the video recording process.

Optionally, the displaying the second window on the video recording interface in response to the triggering operation on the target assistance function includes:
acquiring a video data stream in the video recording process in response to the triggering operation on the target assistance function;
obtaining display data by processing the video data stream according to the target assistance function; and
displaying the second window including the display data on the video recording interface.

Optionally, the obtaining display data by processing the video data stream according to the target assistance function includes:
determining a designated region in a target image in the video data stream in response to a region selection operation on the first window, where the target image is any one of images in the video data stream;
determining a focus region in the designated region; and
obtaining the display data by processing the designated region and the focus region according to the target assistance function.

Optionally, the target assistance function is a focus region enlargement function, and the obtaining the display data by processing the designated region and the focus region according to the target assistance function includes:
obtaining an enlarged focus region by enlarging the focus region; and
obtaining the display data by synthesizing the enlarged focus region and the designated region.

Optionally, the target assistance function is a focus mark function, and the obtaining the display data by processing the designated region and the focus region according to the target assistance function includes:
generating a focus mark according to a focus subject in the focus region; and
obtaining the display data by synthesizing the focus mark and the designated region.

Optionally, the target assistance function is a data display function, and the obtaining display data by processing the video data stream according to the target assistance function includes:
acquiring a photographing parameter of a target image in the video data stream, where the target image is any one of images in the video data stream, and the photographing parameter includes brightness data and/or color channel data;
obtaining a histogram by processing the photographing parameter; and
taking the histogram as the display data.

Optionally, the target assistance function is a target tracking function, and the obtaining display data by processing the video data stream according to the target assistance function includes:
determining a target of interest in a target image in the video data stream, where the target image is any one of images in the video data stream; and
taking a target parameter of the target of interest as the display data. Optionally, the target assistance function is a focus shifting function, and the obtaining display data by processing the video data stream according to the target assistance function includes:
   determining a current focus subject in the video data stream;
   moving, in response to determining that a target of interest in the video data stream is shifted from the current focus subject to a target focus subject, a focus from a position of the current focus subject to a position of the target focus subject; and
   taking a focus region corresponding to the target focus subject as the display data.

Optionally, the target assistance function is a focus compensation function, and the first adjustment control configured to adjust focus data is displayed in the second window; and the method further includes:
acquiring a video data stream in the video recording process;
determining focus compensation data in response to an adjustment operation on the first adjustment control; and
adjusting the focus data of the video data stream according to the focus compensation data, and displaying a video data stream having adjusted focus data on the video recording interface.

Optionally, the method further includes:
adjusting, in response to an invoking operation on target focus data in a history parameter record, the focus data of the video data stream to the target focus data, and displaying the video data stream having the adjusted focus data on the video recording interface, where the history parameter record includes a plurality of focus data stored when videos are recorded in history.

Optionally, the target assistance function is a blurring data adjustment function, and the second adjustment control configured to adjust blurring data is displayed in the second window; and the method further includes:
acquiring a video data stream in the video recording process;
determining target blurring data in response to an adjustment operation on the second adjustment control; and
displaying a video data stream having the blurring data adjusted to the target blurring data on the video recording interface.

Optionally, the first window has a greater display area than the second window.

Optionally, the displaying the second window on the video recording interface includes:
displaying the second window on the first window in a floating manner on the video recording interface.

Optionally, the method further includes:
moving, in response to a dragging operation on the second window, the second window to a target position corresponding to the dragging operation.

Optionally, the method further includes:
displaying exposure warning information in the second window in response to determining that brightness of an image in a video recorded exceeds a brightness threshold.

Optionally, the method further includes:
displaying a third adjustment control configured to adjust brightness of an image in a video recorded in the second window in response to a brightness control operation; and
determining, in response to an adjustment operation on the third adjustment control, target brightness corresponding to the adjustment operation, and recording a video according to the target brightness.

According to a second aspect of the present invention, there is provided a video recording device. The device includes:
a first display module configured to display a first window on a video recording interface in response to a video recording operation, where the first window is configured to display a preview content in a video recording process; and
a second display module configured to display a second window on the video recording interface in response to a triggering operation on a target assistance function, where the second window is configured to display information corresponding to the target assistance function.

According to a third aspect of the present invention, there is provided a non-transitory computer-readable storage medium. The non-transitory computer-readable storage medium stores a computer program instruction, where the computer program instruction implements the video recording method in the first aspect of the example of the invention when executed by a processor.

According to a fourth aspect of the present invention, there is provided a terminal. The terminal includes:
a storage device including a computer program; and
a processing device configured to implement the video recording method in the first aspect of the example of the invention by executing the computer program.

The technical solutions according to the examples of the invention have the beneficial effects as follows:

In some examples of the invention, the first window configured to display the preview content in the video recording process is displayed on the video recording interface based on the video recording operation. The second window configured to display the information corresponding to the target assistance function is displayed on the video recording interface based on the triggering operation on the target assistance function. In this way, the preview content in the video recording process and the information corresponding to the target assistance function are displayed in the first window and the second window respectively. The information corresponding to the target assistance function rather than various indicators is displayed in the second window based on the triggering operation on the target assistance function. Accordingly, actual demand of a user is satisfied, and a chaotic display interface is prevented.

It is understandable that the above general description and the following detailed description are illustrative and explanatory, and cannot limit the invention.

### BRIEF DESCRIPTION OF DRAWINGS

The accompanying drawings here are incorporated in the description as a constituent part of the description, illustrate examples conforming to the invention, and serve to explain the principles of the invention along with the description.
Fig. 1 is a flowchart of a video recording method shown according to an example.
Fig. 2 is a schematic diagram of a histogram in a video recording method shown according to an example.
Fig. 3 is a schematic diagram of a target tracking function in a video recording method shown according to an example.
Fig. 4 is a schematic diagram of displaying a second window on a first window in a floating manner in a video recording method according to an example.
Fig. 5 is a schematic diagram of displaying a first window and a second window on a video recording interface in parallel in a video recording method shown according to an example.
Fig. 6 is a schematic diagram of a focus region enlargement function and a focus mark function in a video recording method shown according to an example.
Fig. 7 is a block diagram of a video recording device shown according to an example.
Fig. 8 is a block diagram of a terminal shown according to an example.
Fig. 9 is a block diagram of a device for video recording shown according to an example.

### DETAILED DESCRIPTION OF THE INVENTION

Examples will be described in detail here and are illustratively shown in the accompanying drawings. When the following description relates to the accompanying drawings, the same numbers in different accompanying drawings denote the same or similar elements unless indicated otherwise. The embodiments described in the following examples do not denote all embodiments consistent with the invention. On the contrary, the embodiments are merely instances of devices and methods consistent with some aspects of the invention as recited in the appended claims.

At present, most mobile phones, tablet computers, cameras, etc. with photographing function have one display screen. In addition to preview data for video recording, various indicators for adjustment and reference are displayed to the user in a video recording window on the display screen. For example, in a video recording process, a real-time focus indicator is added onto the display screen to display a current focus state. The real-time focus indicator may be a focus box, a focus point, etc. The indicator and a preview data stream of video recording are displayed in one window. The indicator may distract a user, and the user cannot make reference to relevant data information and screens in the indicator perfectly. In the presence of a plurality of indicators, a chaotic display interface will be generated, which hinders the user from checking the preview data, resulting in undesirable user experience.

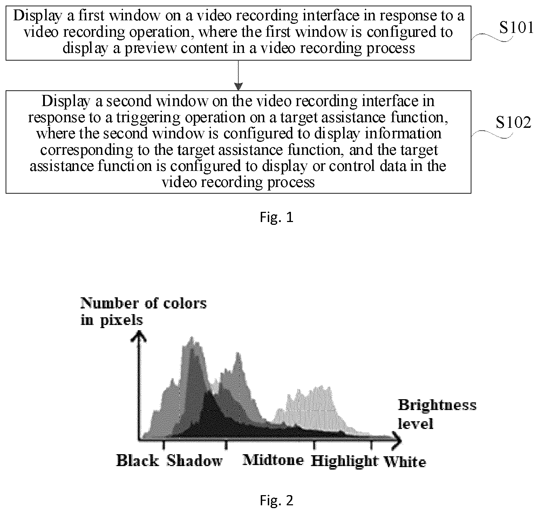

With reference to Fig. 1, a flowchart of a video recording method according to an example is shown. As shown in Fig. 1, the video recording method is applied to a terminal and includes steps S101 and S102.

In step S101, a first window is displayed on a video recording interface in response to a video recording operation, where the first window is configured to display a preview content in a video recording process.

Illustratively, the video recording operation may be an operation that the user clicks on or swipes a video recording function on a display screen of the terminal. The first window is displayed on the video recording interface of the display screen of the terminal based on the video recording operation. The preview content in the video recording process may be displayed in the first window. The preview content includes video data streams in a time series.

In step S102, a second window is displayed on the video recording interface in response to a triggering operation on a target assistance function, where the second window is configured to display information corresponding to the target assistance function, and the target assistance function is configured to display or control data in the video recording process.

Illustratively, a selection control may be provided on the video recording interface. The user may select the target assistance function from a plurality of assistance functions listed in the selection control through clicking, swiping, voice control, etc., so as to realize the triggering operation on the target assistance function. The second window configured to display the information corresponding to the target assistance function may be displayed on the video recording interface based on the triggering operation on the target assistance function. The first window and the second window may be displayed in parallel. Alternatively, the second window may be displayed on the first window in a floating manner.

Illustratively, the target assistance function may be configured to display the data in the video recording process, including displaying a recording parameter in the video recording process, previewing a video data stream having an adjusted photographing parameter, displaying a video data stream added with an assistance mark, and displaying an adjustment control configured to adjust the photographing parameter. The target assistance function may also be configured to control the data in the video recording process, including adjusting the photographing parameter through the adjustment control, selecting a designated region to be enlarged according to an operation by the user, and adding or selecting a mark assisting in photographing according to an operation by the user. The photographing parameter may be brightness data, color channel data, blurring data, focus data, highlight or shadow data, etc.

In the invention, the first window configured to display the preview content in the video recording process is displayed on the video recording interface based on the video recording operation. The second window configured to display the information corresponding to the target assistance function is displayed on the video recording interface based on the triggering operation on the target assistance function. In this way, the preview content in the video recording process and the information corresponding to the target assistance function are displayed in the first window and the second window respectively. The information corresponding to the target assistance function rather than various indicators is displayed in the second window based on the triggering operation on the target assistance function. Accordingly, actual demand of a user is satisfied, and a chaotic display interface is prevented.

As an optional example, the step that the second window is displayed on the video recording interface in response to the triggering operation on the target assistance function includes:
a video data stream in the video recording process is acquired in response to the triggering operation on the target assistance function;
display data are obtained by processing the video data stream according to the target assistance function; and
the second window including the display data is displayed on the video recording interface.

Illustratively, the video data stream in the video recording process may be acquired from an image sensor or an image buffer through an application programming interface (API) or an image processing library. When the terminal receives the triggering operation on the target assistance function, the video data stream in the video recording process may be processed through a processing flow corresponding to the target assistance function. It can be understood that different assistance functions correspond to different processing flows. After processing is completed, the display data to be displayed in the second window are obtained. The second window including the display data is displayed on the video recording interface, so that a reference is offered for the video recording process of the user.

As an optional example, the step that display data are obtained by processing the video data stream according to the target assistance function includes:
a designated region in a target image in the video data stream is determined in response to a region selection operation on the first window, where the target image is any one of images in the video data stream;
a focus region in the designated region is determined; and
the display data are obtained by processing the designated region and the focus region according to the target assistance function.

Illustratively, the region selection operation may be an operation mode such as clicking and swiping. The user may determine the designated region in the target image in the video data stream based on the region selection operation in the first window. It can be understood that a position point on image data generated when the region selection operation is triggered may be a focus. The designated region may be a region within a first range for triggering the focus, for example, within a circular region centered on the focus and spaced from the focus by 20 pixels. Alternatively, the designated region may be within a range having a preset shape and centered on the focus, for example, a rectangular region of 20 pixels by 40 pixels centered on the focus. In general, a shape of the designated region corresponds to a shape of the second window. The focus region may be determined according to a focus subject near the focus. When the region selection operation is triggered, the focus subject may be recognized from the designated region through an image recognition algorithm, such as a computer vision technology or a deep learning model, and a corresponding focus region may be selected. Alternatively, the focus region may be a region within a second range of the focus, where the first range is wider than the second range.

As an optional example, the target assistance function is a focus region enlargement function, and the step that the display data are obtained by processing the designated region and the focus region are processed according to the target assistance function includes:
an enlarged focus region is obtained by enlarging the focus region; and
the display data are obtained by synthesizing the enlarged focus region and the designated region.

Illustratively, when the target assistance function is the focus region enlargement function, a number of pixels and image details of the focus region may be increased through an image interpolation algorithm, such as bilinear interpolation or bicubic interpolation, so that the focus region is enlarged. A designated region image having an enlarged focus may be obtained by synthesizing the enlarged focus region and the designated region through an image synthesis technology. The designated region image may be displayed in the second window. In order to improve the performance of the focus region enlargement function and user experience, parallel computing, hardware acceleration, an optimization algorithm, etc. may be applied, so that the image processing speed can be increased, the image processing quality can be improved, and the delay time can be shortened.

Illustratively, when the target assistance function is the focus region enlargement function, the second window is displayed on the video recording interface. When the user performs a focusing operation, the video data stream is acquired, the focus subject in the target image in the video data stream is analyzed through an algorithm. Accordingly, a central position of the focus subject may be determined or a region selected by the user may be determined as the focus region to be enlarged. After the focus region is enlarged, the original designated region and the focus region are synthesized, and a synthesized region is displayed in the second window. In this way, more intuitive visual feedback is provided for the user. The user may more accurately determine the focus region and check the definition of the focus region in real time through the enlarged focus region in the second window.

As an optional example, the target assistance function is a focus mark function, and the step that the display data are obtained by processing the designated region and the focus region according to the target assistance function includes:
a focus mark is generated according to a focus subject in the focus region; and
the display data are obtained by synthesizing the focus mark and the designated region.

Illustratively, the focus mark may be added onto the video recording interface, so that the user may align a focus position with the focus mark and adjust the focus position more accurately. The focus mark may be a grid line, a focus reference line, an assistance pattern, etc. Here, when the target assistance function is the focus mark function, the second window is displayed on the video recording interface. When the user performs a focusing operation, the video data stream is acquired. The target image in the video data stream undergoes preprocessing operations including image enhancement, noise removal, color correction, etc. Thus, the image quality and the focus subject recognition accuracy can be improved. Then, the focus subject in the target image in the video data stream is analyzed through an algorithm to determine a position of the focus subject. According to the focus subject recognized from the focus region and the original designated region, a designated region image having the focus mark may be obtained through image synthesis or image superposition and displayed in the second window. In this way, the focus mark is superimposed on the focus subject in the designated region, so that the user may align the focus position with the focus subject and adjust the focus position more rapidly through the focus mark.

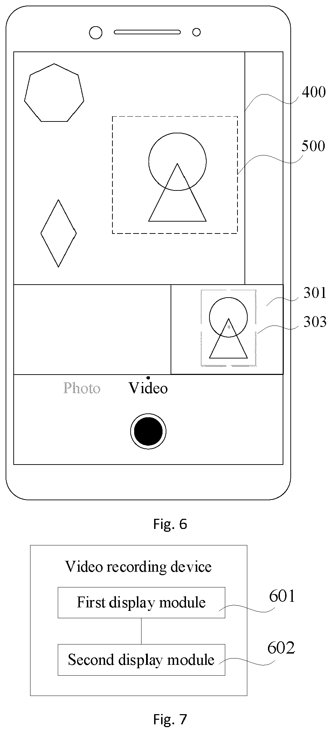

Illustratively, as shown in Fig. 6, the user clicks on the designated region 500 including the focus subject in the first window 400. For the focus region enlargement function, the focus region in the designated region 500 of the image displayed in the first window 400 is enlarged, the enlarged focus region and the designated region are synthesized, and a synthesized region is displayed in the second window 301. For the focus mark function, the preview content in the video recording process is displayed in the first window 400, and a blurring effect rather than the focus mark or the focus box may be displayed; and the focus subject currently focused may be displayed in the second window 301, the focus mark 303 may be displayed in the second window 301, and alternatively, a blurring object, a blurring degree, etc. may be further displayed in the second window 301.

As an optional example, the target assistance function is a data display function, and the step that display data are obtained by processing the video data stream according to the target assistance function includes:
a photographing parameter of a target image in the video data stream is acquired, where the target image is any one of images in the video data stream, and the photographing parameter includes brightness data and/or color channel data;
a histogram is obtained by processing the photographing parameter; and
the histogram is taken as the display data.

Illustratively, when the target assistance function is the data display function, the histogram obtained by acquiring and processing the brightness data and/or color channel data of the target image in the video data stream is displayed. Thus, the user may intuitively view the brightness data and/or color channel data in the video recording process through the histogram. As shown in Fig. 2, a horizontal axis of the histogram represents a brightness level, a vertical axis of the histogram represents a number of colors in pixels, and a number of pixels of the image in each brightness level is graphically represented to show the distribution of the pixels in the image. Specifically, the histogram shows details in shadows (displayed at a left portion of the histogram), midtones (displayed in the middle), and highlights (displayed at a right portion). With the assistance of the histogram, the user may determine whether a certain image has enough details to be corrected to a desirable degree. It can be understood that details of a low-tone image are concentrated in shadows, details of a high-tone image are concentrated in highlights, and details of an average-tone image are concentrated in midtones. An image with a full tonal range has a plurality of pixels in all regions.

Illustratively, different types of histograms such as linear graphs, bar graphs, or color distribution graphs may be provided to satisfy the personalized demand and preferences of the users.

As an optional example, the target assistance function is a target tracking function, and the step that display data are obtained by processing the video data stream according to the target assistance function includes:
a target of interest in a target image in the video data stream is determined, where the target image is any one of images in the video data stream; and
a target parameter of the target of interest is taken as the display data.

Illustratively, when the target assistance function is the target tracking function, the video data stream is acquired, and the target of interest in the target image in the video data stream may be recognized and tracked through the computer vision technology, such as a target detection and tracking algorithm. Accordingly, a position, a motion trajectory, etc. of the target of interest are determined. Then, an information window for displaying information associated with the target of interest and the target image are synthesized, and a synthesized image is displaying in the second window. Thus, intelligent camera movement can be realized. In the video recording process, an operation of determining the target of interest may be continuously repeated. A display content in the second window is updated by acquiring, analyzing, and processing latest image data continuously. Accordingly, the display content and position are consistent with those of the target of interest.

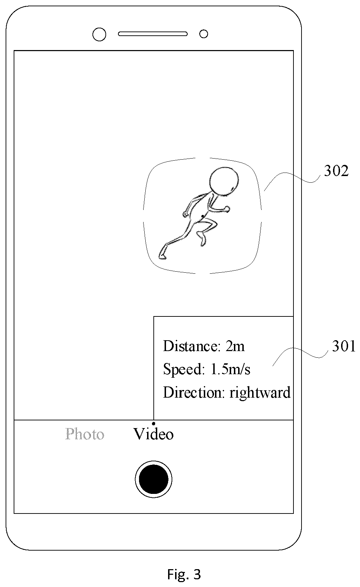

Illustratively, with reference to Fig. 3, in a process of following the target for photographing, the target parameter of the target of interest may be displayed in the second window 301 through the target tracking function. The target parameter may be, for example, a movement distance, a movement speed, a movement direction, a camera movement speed, a camera movement direction, and a camera movement effect of the target of interest. A boundary box 302 configured to frame the target of interest may also be displayed on the video recording interface. The boundary box 302 is configured to indicate a current target of interest. The boundary box 302 may be resized by the user. In the recording process, the user may specify a new target of interest. The new target of interest may also be recognized through the image recognition algorithm when the screen is changed. When the target of interest in the target image in the video data stream is determined, the target of interest in the target image may be recognized and tracked through the target detection algorithm. Thus, the position, motion trajectory, etc. of the target are determined and may be set as demanded actually.

Also, an interactive interface may also be provided for the user. The target parameter to be displayed may be selected in the interactive interface through interactive elements such as a menu, a slider, and a button. Accordingly, contents and styles displayed on the interactive interface may be customized and adjusted by the user.

As an optional example, the target assistance function is a focus shifting function, and the step that display data are obtained by processing the video data stream according to the target assistance function includes:
a current focus subject in the video data stream is determined;
in response to determining that a target of interest in the video data stream is shifted from the current focus subject to a target focus subject, a focus is moved from a position of the current focus subject to a position of the target focus subject; and
a focus region corresponding to the target focus subject is taken as the display data.

Illustratively, in the video recording process, a focus position may be automatically shifted through the focus shifting function. Here, the target of interest may be recognized through the image recognition algorithm. For example, an object or an animal in a movement process, a person in a talking state, etc. may be taken as the targets of interest. When a person is switched from a talking state to another state, or when another object starts to move after one object does not move any longer, the focus may be moved from the position of the current focus subject to the position of the target focus subject to realize the focus shifting function. After the focus is moved, a focus region corresponding to a position of the focus may be taken as the display data. In the process, the focus subject in the screen in the second window is switched from the current focus subject to the target focus subject.

In an optional example, the target assistance function is a focus compensation function, and the first adjustment control configured to adjust focus data is displayed in the second window; and the method further includes:
a video data stream in the video recording process is acquired;
focus compensation data are determined in response to an adjustment operation on the first adjustment control; and
the focus data of the video data stream are adjusted according to the focus compensation data, and a video data stream having adjusted focus data is displayed on the video recording interface.

Illustratively, when the target assistance function is the focus compensation function, the first adjustment control configured to adjust the focus data is displayed in the second window. The user may adjust the focus data of the video data stream by executing the adjustment operation on the first adjustment control.

Illustratively, the focus data may be acquired through a focus sensor of a camera, a phase focus technology, etc. Interactive elements of the first adjustment control may be a slider, an addition/subtraction button, etc. The focus compensation data demanded by the user to compensate the focus data may be determined by swiping the first adjustment control or clicking on the corresponding button by the user. The focus compensation data may be added or subtracted through the focus data to determine the adjusted focus data.

In addition, in order to improve the performance and stability of the focus compensation adjustment function, appropriate focus sensors, optimization algorithms, and feedback mechanisms may be employed to ensure that the focus data adjusted by the user may be accurately applied to an actual focusing process for a desirable focus effect.

Illustratively, when the target assistance function is the focus compensation function, the user may intuitively adjust a focus compensation parameter by providing an interactive control configured for focus compensation adjustment, such as a slider and an addition/subtraction button for the user in the second window. After the user performs an adjustment operation on the interactive control, the focus data are acquired through the focus sensor, the phase focus technology, or other focus measurement methods. Based on a focus compensation algorithm, the focus position may be finely adjusted according to focus compensation data adjusted by the user. Thus, over-focusing or slight under-focusing are realized, and the focus compensation data adjusted by the user may be applied to the actual focusing process. Specifically, the focus position is adjusted accordingly according to the focus compensation data set by the user in response to a swiping or clicking operation on the first adjustment control by the user. A screen after focus compensation adjustment may be displayed on the video recording interface or in the second window in real time. Accordingly, the user may intuitively observe and confirm an adjusted focus result.

As an optional example, the method further includes:
in response to an invoking operation on target focus data in a history parameter record, the focus data of the video data stream are adjusted to the target focus data, and the video data stream having the adjusted focus data is displayed on the video recording interface, where the history parameter record includes a plurality of focus data stored when videos are recorded in history.

Illustratively, in order to make it convenient for the user to perform focus compensation adjustment in different scenes, a saving function and a restoring function of the focus data may be provided. The adjusted focus data are saved in the history parameter record in response to a saving operation on the adjusted focus data. The focus data of the video data stream are adjusted to the target focus data in response to the invoking operation on the target focus data in the history parameter record. In this way, the user may switch between different photographing scenes, and focus data previously set may be automatically restored.

As an optional example, the target assistance function is a blurring data adjustment function, and the second adjustment control configured to adjust blurring data is displayed in the second window; and the method further includes:
a video data stream in the video recording process is acquired;
target blurring data are determined in response to an adjustment operation on the second adjustment control; and
a video data stream having blurring data adjusted to the target blurring data is displayed on the video recording interface.

Illustratively, the target assistance function may further adjust the blurring data. The second adjustment control configured to adjust the blurring data is displayed in the second window. The user may adjust the blurring data of the video data stream by executing the adjustment operation on the second adjustment control.

Illustratively, interactive elements of the second adjustment control may be a slider, an addition/subtraction button, etc. The target blurring data adjusted by the user may be determined by swiping the second adjustment control or clicking on the corresponding button by the user. The target blurring data are applied to the video data stream, so that the blurring data of the video data stream are adjusted to the target blurring data, and the resulting video data stream is displayed in the second window.

As an optional example, the first window has a greater display area than the second window.

Illustratively, on the video recording interface, the first window is configured to display the preview content in the video recording process, and the second window is configured to display the information corresponding to the target assistance function. In order to ensure that the user pays more attention to the preview content in the video recording process, the display area of the first window is set to be greater than that of the second window.

As an optional example, the step that a second window is displayed on the video recording interface includes:

the second window is displayed on the first window in a floating manner on the video recording interface.

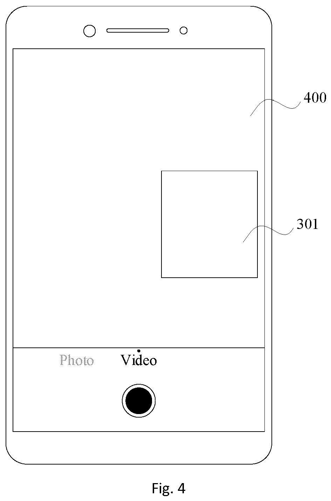

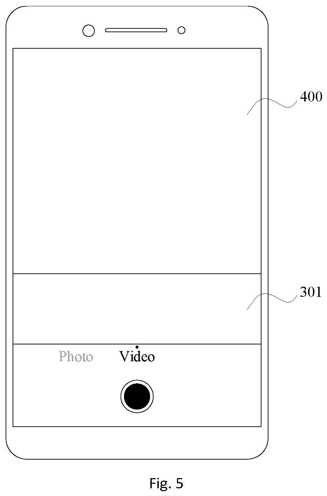

Illustratively, with reference to Figs. 4 and 5, on the video recording interface, the second window 301 may be displayed on the first window 400 in a floating manner shown in Fig. 4, or may be displayed on the video recording interface in parallel with the first window 400 in a parallel arrangement manner shown in Fig. 5.

As an optional example, the method further includes:
in response to a dragging operation on the second window, the second window is moved to a target position corresponding to the dragging operation.

Illustratively, the second window may be moved to the target position corresponding to the dragging operation through a dragging action on the second window, which is performed by the user on a screen of the terminal. The dragging operation may be implemented by, for example, holding the second window and swiping the second window to the target position.

As an optional example, the method further includes:
exposure warning information is displayed in the second window in response to determining that brightness of an image in a video recorded exceeds a brightness threshold.

Illustratively, an exposure warning function is added. The exposure warning information is displayed in the second window when the brightness of the image in the video recorded exceeds the brightness threshold. Accordingly, the user may evaluate an exposure condition of the image in the recording process. The over-exposure or under-exposure is avoided as much as possible to ensure that the video recorded has a desirable exposure quality. An exposure warning threshold setting function may also be provided for the user. The user may set the exposure warning threshold as demanded in photographing scenes, so as to adapt to different exposure requirements and environmental conditions.

As an optional example, the method further includes:
a third adjustment control configured to adjust brightness of an image in a video recorded is displayed in the second window in response to a brightness control operation; and
in response to an adjustment operation on the third adjustment control, target brightness corresponding to the adjustment operation is determined, and a video is recorded according to the target brightness.

Illustratively, a third adjustment control configured to adjust the brightness of the image in the video recorded may be provided in the second window. A real-time brightness adjustment function may be provided for the user. Thus, the user may obtain a more suitable photographing effect by adjusting brightness data of the camera according to the exposure warning information.

Fig. 7 is a block diagram of a video recording device shown according to an example. With reference to Fig. 7, the video recording device includes a first display module 601 and a second display module 602.

The first display module 601 is configured to display a first window on a video recording interface in response to a video recording operation, where the first window is configured to display a preview content in a video recording process.

The second display module 602 is configured to display a second window on the video recording interface in response to a triggering operation on a target assistance function, where the second window is configured to display information corresponding to the target assistance function, and the target assistance function is configured to display or control data in the video recording process.

As an optional example, the second display module 602 includes:
an acquisition sub-module configured to acquire a video data stream in the video recording process in response to the triggering operation on the target assistance function;
an obtaining sub-module configured to obtain display data by processing the video data stream according to the target assistance function; and
a display sub-module configured to display the second window including the display data on the video recording interface.

As an optional example, the obtaining sub-module includes:
a first determination sub-module configured to determine a designated region in a target image in the video data stream in response to a region selection operation on the first window, where the target image is any one of images in the video data stream;
a second determination sub-module configured to determine a focus region in the designated region; and
a processing sub-module configured to obtain the display data by processing the designated region and the focus region according to the target assistance function.

As an optional example, the target assistance function is a focus region enlargement function, and the processing sub-module is specifically configured to:
obtain an enlarged focus region by enlarging the focus region; and
obtain the display data by synthesizing the enlarged focus region and the designated region.

As an optional example, the target assistance function is a focus mark function, and the processing sub-module is specifically configured to:
generate a focus mark according to a focus subject in the focus region; and
obtain the display data by synthesizing the focus mark and the designated region.

As an optional example, the target assistance function is a data display function, and the obtaining sub-module is specifically configured to:
acquire a photographing parameter of a target image in the video data stream, where the target image is any one of images in the video data stream, and the photographing parameter includes brightness data and/or color channel data;
obtain a histogram by processing the photographing parameter; and
take the histogram as the display data.

As an optional example, the target assistance function is a target tracking function, and the obtaining sub-module is specifically configured to:
determine a target of interest in a target image in the video data stream, where the target image is any one of images in the video data stream; and
take a target parameter of the target of interest as the display data.

As an optional example, the target assistance function is a focus shifting function, and the obtaining sub-module is specifically configured to:
determine a current focus subject in the video data stream;
move, in response to determining that a target of interest in the video data stream is shifted from the current focus subject to a target focus subject, a focus from a position of the current focus subject to a position of the target focus subject; and
take a focus region corresponding to the target focus subject as the display data.

In an optional example, the target assistance function is a focus compensation function, and a first adjustment control configured to adjust focus data is displayed in the second window; and the video recording device further includes:
an acquisition module configured to acquire a video data stream in the video recording process;
a determination module configured to determine focus compensation data in response to an adjustment operation on the first adjustment control; and
a first adjustment module configured to adjust the focus data of the video data stream according to the focus compensation data, and display a video data stream having adjusted focus data on the video recording interface.

As an optional example, the video recording device further includes:
a second adjustment module configured to adjust, in response to an invoking operation on target focus data in a history parameter record, the focus data of the video data stream to the target focus data, and display the video data stream having the adjusted focus data on the video recording interface, where the history parameter record includes a plurality of focus data stored when videos are recorded in history.

As an optional example, the target assistance function is a blurring data adjustment function, and a second adjustment control configured to adjust blurring data is displayed in the second window; and the video recording device is further configured to:
acquire a video data stream in the video recording process;
determine target blurring data in response to an adjustment operation on the second adjustment control; and
display a video data stream having blurring data adjusted to the target blurring data on the video recording interface.

As an optional example, the first window has a greater display area than the second window.

As an optional example, the second display module 602 is specifically configured to:
display the second window on the first window in a floating manner on the video recording interface.

As an optional example, the video recording device further includes:
a movement module configured to move, in response to a dragging operation on the second window, the second window to a target position corresponding to the dragging operation.

As an optional example, the video recording device further includes:
a third display module configured to display exposure warning information in the second window in response to determining that brightness of an image in a video recorded exceeds a brightness threshold.

As an optional example, the video recording device further includes:
a fourth display module configured to display a third adjustment control configured to adjust brightness of an image in a video recorded in the second window in response to a brightness control operation; and
a video recording module configured to determine, in response to an adjustment operation on the third adjustment control, target brightness corresponding to the adjustment operation, and record a video according to the target brightness.

A specific way of each module of the video recording device in the above examples to execute an operation has been described in detail in the examples relating to the video recording method and will not be described in detail here.

A non-transitory computer-readable storage medium is further provided by the invention. The non-transitory computer-readable storage medium stores a computer program instruction, where the computer program instruction implements the video recording method provided by the invention when executed by a processor.

A terminal is further provided by the invention. The terminal includes:
a storage device including a computer program; and
a processing device configured to implement the video recording method provided by the invention by executing the computer program.

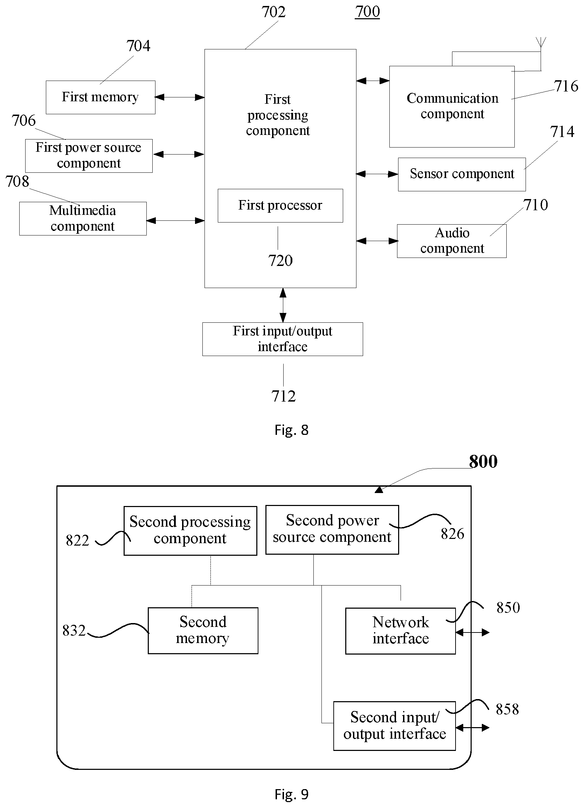

Fig. 8 is a block diagram of a terminal 700 shown according to an example. For example, the terminal 700 may be a mobile phone, a tablet apparatus, a personal digital assistant, etc.

With reference to Fig. 8, the terminal 700 may include one or more of the following components: a first processing component 702, a first memory 704, a first power source component 706, a multimedia component 708, an audio component 710, a first input/output interface 712, a sensor component 714, and a communication component 716.

The first processing component 702 generally controls an overall operation of the terminal 700, such as operations associated with display, telephone calls, data communication, a camera operation, and a recording operation. The first processing component 702 may include one or more first processors 720 to execute instructions, so as to complete all or some steps of the above video recording method. In addition, the first processing component 702 may include one or more modules, so as to facilitate interaction between the first processing component 702 and other components. For example, the first processing component 702 may include a multimedia module, so as to facilitate interaction between the multimedia component 708 and the first processing component 702.

The first memory 704 is configured to store various types of data, so as to support the operations at the terminal 700. Instances of these data include instructions configured for any application or method operating on the terminal 700, contact data, phonebook data, messages, pictures, video, etc. The first memory 704 may be implemented through any type of volatile or non-volatile storage apparatuses or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The first power source component 706 provides power for various components of the terminal 700. The first power source component 706 may include a power source management system, one or more power sources, and other components associated with power generation, management, and distribution for the terminal 700.

The multimedia component 708 includes a screen that provides an output interface between the terminal 700 and the user. In some examples, the screen may include a liquid crystal display (LCD) and a touch panel (TP). If including the touch panel, the screen may be implemented as a touch screen, so as to receive an input signal from the user. The touch panel includes one or more touch sensors to sense touches, swipes, and gestures on the touch panel. Except for sensing a boundary of a touch or swipe action, the touch sensor may also measure duration and a pressure associated with a touch or swipe operation. In some examples, the multimedia component 708 includes a front-facing camera and/or a rear-facing camera. When the terminal 700 is in an operating mode, such as a photographing mode or a video mode, the front-facing camera and/or the rear-facing camera may receive external multimedia data. Each of the front-facing camera and the rear-facing camera may be a fixed optical lens system or have a focal length and an optical zoom capability.

The audio component 710 is configured to output and/or input an audio signal. For example, the audio component 710 includes a microphone (MIC) that is configured to receive external audio signals when the terminal 700 is in an operating mode, such as a call mode, a recording mode, and a voice recognition mode. The audio signal received may be further stored in the first memory 704 or sent via the communication component 716. In some examples, the audio component 710 further includes a speaker configured to output the audio signal.

The first input/output interface 712 provides an interface between the first processing component 702 and a peripheral interface module, which may be a keyboard, a click wheel, a button, etc. These buttons may include, but are not limited to, home buttons, volume buttons, start buttons, and lock buttons.

The sensor component 714 includes one or more sensors configured to provide state assessments for various aspects of the terminal. For example, the sensor component 714 may detect an on/off state of the terminal 700, and relative locating of components such as a display and a keypad of the terminal 700. The sensor component 714 may further detect a change in position of the terminal 700 or one component of the terminal 700, the presence or absence of contact between the user and the terminal 700, orientation or acceleration/deceleration of the terminal 700, and a change in temperature of the terminal 700. The sensor component 714 may include a proximity sensor configured to detect the presence of a nearby object without any physical contact. The sensor component 714 may further include light sensors, such as a complementary metal-oxide-semiconductor transistor (CMOS) or charge coupled device (CCD) image sensor configured to be used in imaging application. In some examples, the sensor component 714 may further include an acceleration sensor, a gyroscopic sensor, a magnetic sensor, a pressure sensor, or a temperature sensor.

The communication component 716 is configured to facilitate wired or wireless communication between the terminal 700 and other apparatus. The terminal 700 may access a radio network based on a communication standard, such as a wireless fidelity (WiFi) network, a 2nd generation (2G) network or a 3rd generation (3G) network, or their combinations. In an example, the communication component 716 receives a broadcast signal or broadcast related information from an external broadcast management system via a broadcast channel. In an example, the communication component 716 further includes a near field communication (NFC) module to facilitate short-range communication. For example, the NFC module may be implemented based on a radio frequency identification (RFID) technology, an infrared data association (IrDA) technology, an ultra wide band (UWB) technology, a Bluetooth (BT) technology, etc.

In an example, the terminal 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, etc., so as to be configured to execute the above video recording method.

A non-transitory computer-readable storage medium including an instruction, such as a first memory 704 including an instruction, is further provided in an example, where the above instruction may be executed by a first processor 720 of the terminal 700, so as to complete the above video recording method. For example, the non-transitory computer-readable storage medium may be an ROM, a random access memory (RAM), a compact disk read-only memory (CD-ROM), a magnetic tape, a floppy disc, an optical data storage apparatus, etc.

The above video recording device may be a separate electronic apparatus or a part of a separate electronic apparatus. For example, in an example, the device may be an integrated circuit (IC) or a chip. The integrated circuit may be one IC or a set of a plurality of ICs. The chip may be, but is not limited to, the following types: a graphics processing unit (GPU), a central processing unit (CPU), a field programmable gate array (FPGA), a digital signal processor (DSP), an application specific integrated circuit (ASIC), a system on chip (SOC), etc. The above integrated circuit or chip may be configured to implement the above video recording method by executing an executable instruction (or code). The executable instruction may be stored in the integrated circuit or chip or retrieved from another device or apparatus. For example, the integrated circuit or chip includes a processor, a memory, and an interface configured for communication with other devices. The executable instruction may be stored in the memory and implements the above video recording method when executed by the processor. Alternatively, the integrated circuit or chip may implement the above video recording method by receiving the executable instruction through the interface and transmitting the executable instruction to the processor for execution.

A computer program product is further provided in another example. The computer program product encompasses a computer program executable by a programmable device, where the computer program has a code portion configured to execute the above video recording method when executed by the programmable device.

Fig. 9 is a block diagram of a device 800 for video recording shown according to an example. For example, the device 800 for video recording may be provided as a server. With reference to Fig. 9, the device 800 for video recording includes a second processing component 822, which further includes one or more second processors, and memory resources represented by a second memory 832 and configured to store an instruction executable by the second processing component 822, such as an application. The application stored in the second memory 832 may include one or more modules, each of which corresponds to a set of instructions. In addition, the second processing component 822 is configured to execute the above video recording method by executing the instruction.

The device 800 for video recording may further include a second power source component 826 configured to execute power source management of the device 800 for video recording, a wired or wireless network interface 850 configured to connect the device 800 to a network, and a second input/output interface 858. The device 800 for video recording may operate an operating system stored in the second memory 832, such as Windows Server^{™}, Mac OS X^{™}, Unix^{™}, Linux^{™}, FreeBSD^{™}, etc.

## Claims

1. A video recording method, comprising:
Displaying (S101) a first window (400) on a video recording interface in response to a video recording operation, wherein the first window (400) is configured to display a preview content in a video recording process; and
Displaying (S102) a second window (301) on the video recording interface in response to a triggering operation on a target assistance function, wherein the second window (301) is configured to display information corresponding to the target assistance function, and the target assistance function is configured to display or control data in the video recording process.

2. The method according to claim 1, wherein the displaying (S102) the second window (301) on the video recording interface in response to the triggering operation on the target assistance function comprises:
acquiring a video data stream in the video recording process in response to the triggering operation on the target assistance function;
obtaining display data by processing the video data stream according to the target assistance function; and
displaying the second window (301) comprising the display data on the video recording interface.

3. The method according to claim 2, wherein the obtaining display data by processing the video data stream according to the target assistance function comprises:
determining a designated region (500) in a target image in the video data stream in response to a region selection operation on the first window (400), wherein the target image is any one of images in the video data stream;
determining a focus region in the designated region (500); and
obtaining the display data by processing the designated region (500) and the focus region according to the target assistance function.

4. The method according to claim 3, wherein the target assistance function is a focus region enlargement function, and the obtaining the display data by processing the designated region (500) and the focus region according to the target assistance function comprises: obtaining an enlarged focus region by enlarging the focus region; and obtaining the display data by synthesizing the enlarged focus region and the designated region (500);
or,
wherein the target assistance function is a focus mark function, and the obtaining the display data by processing the designated region (500) and the focus region according to the target assistance function comprises: generating a focus mark (303) according to a focus subject in the focus region; and obtaining the display data by synthesizing the focus mark (303) and the designated region (500).

5. The method according to claim 2, wherein the target assistance function is a data display function, and the obtaining display data by processing the video data stream according to the target assistance function comprises: acquiring a photographing parameter of a target image in the video data stream, wherein the target image is any one of images in the video data stream, and the photographing parameter comprises at least one of brightness data or color channel data; obtaining a histogram by processing the photographing parameter; and taking the histogram as the display data;
or,
wherein the target assistance function is a target tracking function, and the obtaining display data by processing the video data stream according to the target assistance function comprises:
determining a target of interest in a target image in the video data stream, wherein the target image is any one of images in the video data stream; and taking a target parameter of the target of interest as the display data;
or,
wherein the target assistance function is a focus shifting function, and the obtaining display data by processing the video data stream according to the target assistance function comprises:
determining a current focus subject in the video data stream; moving, when a target of interest in the video data stream is shifted from the current focus subject to a target focus subject, a focus from a position of the current focus subject to a position of the target focus subject; and taking a focus region corresponding to the target focus subject as the display data.

6. The method according to claim 1, wherein the target assistance function is a focus compensation function, and the first adjustment control configured to adjust focus data is displayed in the second window (301); and the method further comprises:
acquiring a video data stream in the video recording process;
determining focus compensation data in response to an adjustment operation on the first adjustment control; and
adjusting the focus data of the video data stream according to the focus compensation data, and displaying a video data stream having adjusted focus data on the video recording interface.

7. The method according to claim 1, wherein the target assistance function is a blurring data adjustment function, and the second adjustment control configured to adjust blurring data is displayed in the second window (301); and the method further comprises:
acquiring a video data stream in the video recording process;
determining target blurring data in response to an adjustment operation on the second adjustment control; and
displaying a video data stream having the blurring data adjusted to the target blurring data on the video recording interface.

8. The method according to any one of claims 1-7, further comprising:
adjusting, in response to an invoking operation on target focus data in a history parameter record, the focus data of the video data stream in the video recording process to the target focus data, and displaying the video data stream having the adjusted focus data on the video recording interface, wherein the history parameter record comprises a plurality of focus data stored when videos are recorded in history.

9. The method according to any one of claims 1-8, wherein the first window (400) has a greater display area than the second window (301).

10. The method according to any one of claims 1-9, wherein the displaying (S102) the second window (301) on the video recording interface comprises:
displaying the second window (301) on the first window (400) in a floating manner on the video recording interface.

11. The method according to any one of claims 1-10, further comprising:
moving, in response to a dragging operation on the second window (301), the second window (301) to a target position corresponding to the dragging operation.

12. The method according to any one of claims 1-11, further comprising:
displaying exposure warning information in the second window (301) on a condition that brightness of an image in a video recorded exceeds a brightness threshold.

13. The method according to any one of claims 1-12, further comprising:
displaying a third adjustment control configured to adjust brightness of an image in a video recorded in the second window (301) in response to a brightness control operation; and
determining, in response to an adjustment operation on the third adjustment control, target brightness corresponding to the adjustment operation, and recording a video according to the target brightness.

14. A video recording device, comprising:
a first display module configured to display a first window on a video recording interface in response to a video recording operation, wherein the first window is configured to display a preview content in a video recording process; and
a second display module configured to display a second window on the video recording interface in response to a triggering operation on a target assistance function, wherein the second window is configured to display information corresponding to the target assistance function.

15. A non-transitory computer-readable storage medium, storing a computer program instruction, wherein the non-transitory computer program instruction implements the video recording method according to any one of claims 1-13 when executed by a processor.
